# EUROPEAN PATENT APPLICATION

(11) **EP 2 763 005 A1**
(43) Date of publication of application: **06.08.2014**
(21) Application number: 12835428.9
(22) Date of filing: 11.07.2012
(51) Int. Cl.: G06F 3/041, G06F 3/048

(54) **PORTABLE INFORMATION TERMINAL, TOUCH OPERATION CONTROL METHOD, AND PROGRAM**

(30) Priority: 26.09.2011 JP 2011208481
(71) Applicant: NEC CASIO Mobile Communications, Ltd., Kawasaki-shi Kanagawa 211-8666 (JP)
(72) Inventor: SHIMIZU, Toshiyuki, Kodama-gun Saitama 367-0297 (JP)
(74) Representative: Vossius & Partner
(86) International application number: PCT/JP2012/004468
(87) International publication number: WO 2013/046507

(57) **Abstract**

[**PROBLEM TO BE SOLVED**] To avoid false detection of an unintended touch operation of a user by limiting touch operation detection at the edges of a touch panel that is included in a portable information terminal depending on a usage state.

[**SOLUTION**] Coordinate acquiring means 11 acquires coordinates on which a touch operation is performed, from the touch panel 10-2. Judgment means 12 judges whether or not the touch operation to the touch panel 10-2 is a touch operation to an edge area of the touch panel 10-2, based on the acquired coordinates. Usage state judgment means 13 judges that the usage state by the touch operation when it is judged that the touch operation is the touch operation to the edge area of the touch panel 10-2. Touch operation control means 14 limits the touch operation to the edge area of the touch panel 10-2 based on the usage state that is judged by the usage state judgment means 13.

## Description

### TECHNICAL FIELD

The present invention relates to a portable information terminal that includes a touch panel, a touch operation control method, and a program.

### BACKGROUND ART

In a portable information terminal that includes a touch panel such as a smartphone, there has been a case in which false detection occurs when the portable information terminal is held by a hand and the hand reaches the edge of a touch panel involuntarily. Recently, in a portable information terminal 1, it tends that the finger easily touches a screen because reduction in size and thickness of a device has been proceeding, and false detection for a touch panel 2 and an unintended terminal operation of a user due to false detection are caused easily.

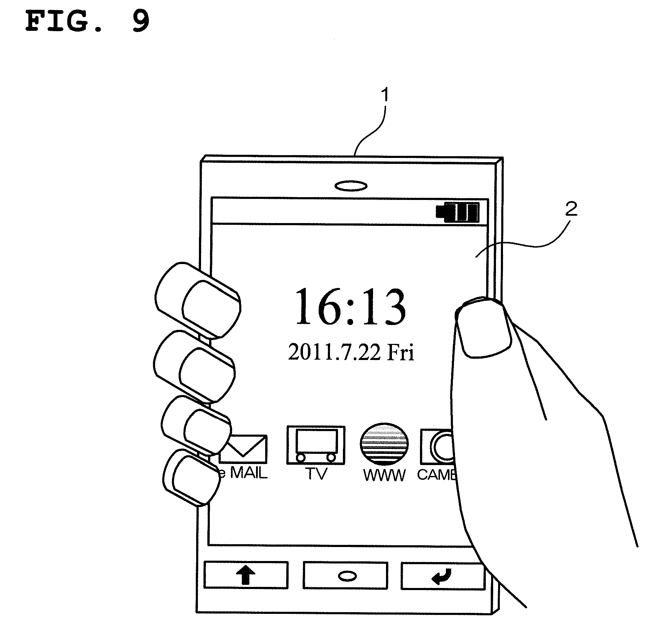

FIG. 9 is a schematic diagram illustrating a state example when the user holds a portable information terminal with a hand. As illustrated in FIG. 9, the user holds the portable information terminal 1 with one hand and performs a touch operation to the touch panel 2 with a finger of the other hand. However, when the user holds the portable information terminal 1 with the one hand, a finger reaches a part of the screen, so that false detection of the touch panel 2 is caused easily in the part of the screen that the finger reaches.

Therefore, for example, in Patent Document 1, a technology is discussed by which an operation invalidity area is physically formed in which a touch operation to the edge of a touch panel 1 is set invalid. In addition, in Patent Document 2, a technology is discussed in which a part on a touch panel 2, which a finger of a hand that holds a portable information terminal 1 reaches is set as a touch invalidity area in which a touch operation is set invalid.

### PRIOR ART DOCUMENTS

### PATENT DOCUMENTS

Patent Document 1: JP 2006-244154
Patent Document 2: JP 2011-028603

### SUMMARY OF INVENTION

### Problem to be Solved by the Invention

When the user holds the portable information terminal 1 with the one hand and performs the touch operation to the touch panel 2 with a finger of the other hand, there is a case in which an operation screen by application software is overlapped with the part that the finger reaches. Therefore, it is necessary that the touch operation to the part that the finger reaches is merely set invalid, and validity/invalidity of a touch operation to the part that the finger reaches is controlled depending on the way of the touch operation (usage state) with respect to the touch panel 2.

However, in Patent Document 1 above-described, the operation invalidity area in which the touch operation is set invalid is physically formed, and in Patent Document 2, in the part that the finger reaches of the hand, the touch operation is primarily set invalid, so that it is difficult to flexibly respond to the way of the touch operation (usage state) with respect the touch panel 2, and there is a problem that the effective use, the usability, and the like of the touch panel 2 are impaired.

Therefore, an object of the present invention is to provide a portable information terminal that can prevent false detection that is caused when the user touches the touch panel with the hand involuntarily without impairing the effective use, the usability, and the like of the touch panel, a touch operation control method, and a program.

### Means for Solving the Problem

A portable information terminal according to the present invention is a portable information terminal that includes a touch panel on a display panel and includes a coordinate acquiring means configured to acquire coordinates on which a touch operation is performed from the touch panel when there is the touch operation to the touch panel, a judgment means configured to judge whether or not the touch operation to the touch panel is a touch operation to an edge area of the touch panel, based on the coordinates that are acquired by the coordinate acquiring means, a usage state judgment means configured to judge a usage state by the touch operation when the judgment means judges that the touch operation to the touch panel is the touch operation to the edge area of the touch panel, and a touch operation control means configured to limit the touch operation to the edge area of the touch panel, based on the usage state that is judged by the usage state judgment means.

A touch operation control method according to the present invention is a touch operation control method to a touch panel that is provided on a display panel that is included in a portable information terminal and includes a coordinate acquiring step of acquiring coordinates on which a touch operation is performed from the touch panel when there is the touch operation to the touch panel, a judgment step of judging whether or not the touch operation to the touch panel is a touch operation to an edge area of the touch panel, based on the acquired coordinates, a usage state judgment step of judging a usage state by the touch operation when it is judged that the touch operation to the touch panel is the touch operation to the edge area of the touch panel, and a touch operation control step of limiting the touch operation to the edge area of the touch panel, based on the judged usage state.

A program according to the present invention is a program that causes a computer of a portable information terminal that includes a touch panel on a display panel to execute a coordinate acquiring function to acquire coordinates on which a touch operation is performed from the touch panel when there is the touch operation to the touch panel, a judgment function to judge whether or not the touch operation to the touch panel is a touch operation to an edge area of the touch panel, based on the coordinates that are acquired by the coordinate acquiring function, a usage state judgment function to judge a usage state by the touch operation when the judgment function judges that the touch operation to the touch panel is the touch operation to the edge area of the touch panel, and a touch operation control function to limit the touch operation to the edge area of the touch panel, based on the usage state that is judged by the usage state judgment means.

### Effect of the Invention

According to the invention, false detection that occurs when a hand touches a touch panel involuntarily can be avoided without reducing the effective use, usability, and the like of the touch panel.

### BRIEF DESCRIPTION OF DRAWINGS

FIG. 1 is a schematic diagram illustrating the external appearance of a portable information terminal according to a first embodiment of the present invention.
FIG. 2 is a schematic diagram illustrating parts of a display panel 10-1 and a touch panel 10-2 according to the first embodiment.
FIG. 3 is a flowchart illustrating an operation at the time of detection of a touch operation to a portable information terminal 10 according to the first embodiment.
FIG. 4 is a schematic diagram illustrating a continuous touch operation in the first embodiment.
FIG. 5 is a schematic diagram illustrating a screen example in application software that desires an input using the touch panel 10-2 up to the edge of the display panel 10-1 in the first embodiment.
FIG. 6 is a flowchart illustrating an operation at the time of detection of a touch operation to the portable information terminal 10 according to a modification example of the first embodiment.
FIG. 7 is a schematic diagram illustrating a false detection guard area 10-4 that is set by application software and in which a touch switch is arranged up to the edge of a screen, according to a second embodiment of the present invention.
FIG. 8 is a flowchart illustrating an operation at the time of detection of a touch operation to the portable information terminal 10 according to a modification example of a third embodiment of the present invention.
FIG. 9 is a schematic diagram illustrating a state example when a smartphone is held with a hand.
FIG. 10 is a configuration diagram of Supplementary Note 1.

### DESCRIPTION OF EMBODIMENTS

In the present invention, by limiting touch operation detection in the edge of a touch panel that is included in a portable information terminal depending on the usage state, false detection of a touch operation that is not intended by the user is prevented.

The embodiments of the present invention are described below with reference to drawings.

### A. First embodiment

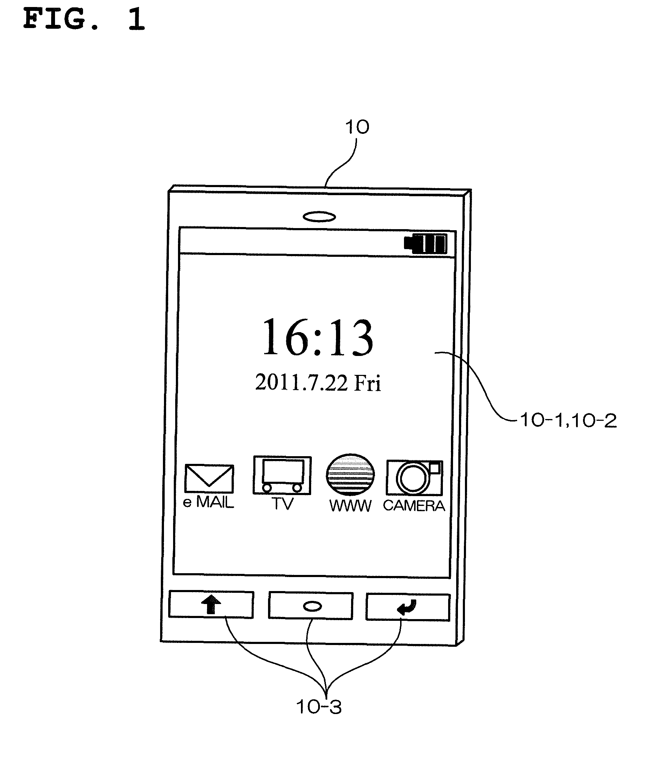

FIG. 1 is a schematic diagram illustrating the external appearance of a portable information terminal according to a first embodiment. In FIG. 1, the portable information terminal 10 according to the first embodiment is a so-called smartphone that is operated by a touch operation on a screen, and includes the display panel 10-1, the touch panel 10-2 that is provided on the display panel 10-1, and a hard key 10-3. The display panel 10-1 displays various pieces of information as the smartphone.

By arranging the touch panel 10-2 so that the touch panel 10-2 is overlapped onto the display panel 10-1, an intuitive operation by direct touch to a button switch and the like that are displayed on the display panel 10-1 can be performed. The hard key 10-3 is used for switching or the like of a screen and used to assist an operation using the touch panel 10-2.

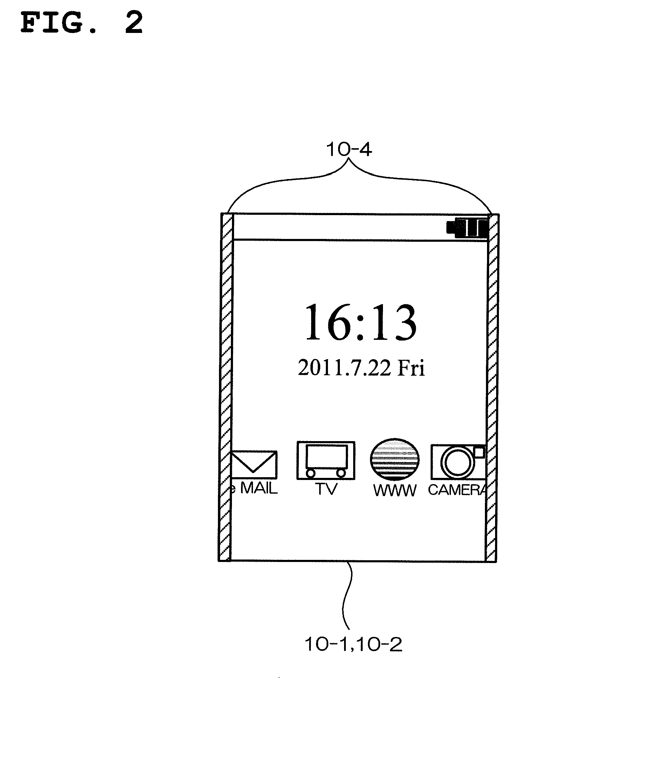

FIG. 2 is a schematic diagram illustrating parts of the display panel 10-1 and the touch panel 10-2 according to the first embodiment. In the portable information terminal 10, the false detection guard area 10-4 in which a touch operation is not detected even when there is a touch operation is provided within a diagonally shaded area illustrated in FIG. 2 on the touch panel 10-2. In the example of FIG. 2, the false detection guard area 10-4 is arranged so as to be overlapped with an operation screen that is displayed on the display panel 10-1. In a case in which the user holds the portable information terminal 10 by a hand, even when the finger touches the edge of the touch panel 10-2, a touch operation to the false detection guard area 10-4 is ignored, so that false detection can be prevented.

In the portable information terminal 10, for example, an operating system for a smartphone, which is represented by Android of Google Inc. (registered trademark) operates and various pieces of application software can be executed on the operating system. The application software is a general term for software in which various functions that the user desires to execute on a computer are directly implemented.

Generally, when there is a touch operation to the touch panel 10-2, the operating system notifies the application software of the coordinates that the finger touches, so that, in the application software, the corresponding function (input using a software keyboard, a function instruction of an icon, or the like) is executed on the basis of the touched coordinates.

Therefore, in the first embodiment, when there is a touch operation to the false detection guard area 10-4, false detection in the touch panel 10-2 is prevented by causing the coordinates of the touch operation not to be notified to the application software.

Next, an operation of the above-described first embodiment is described below.

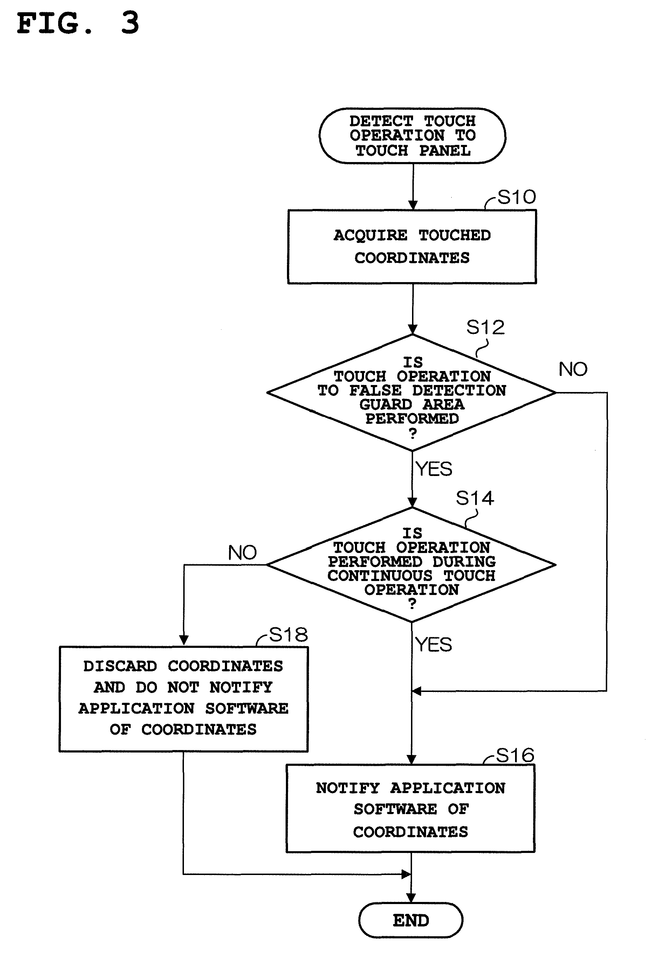

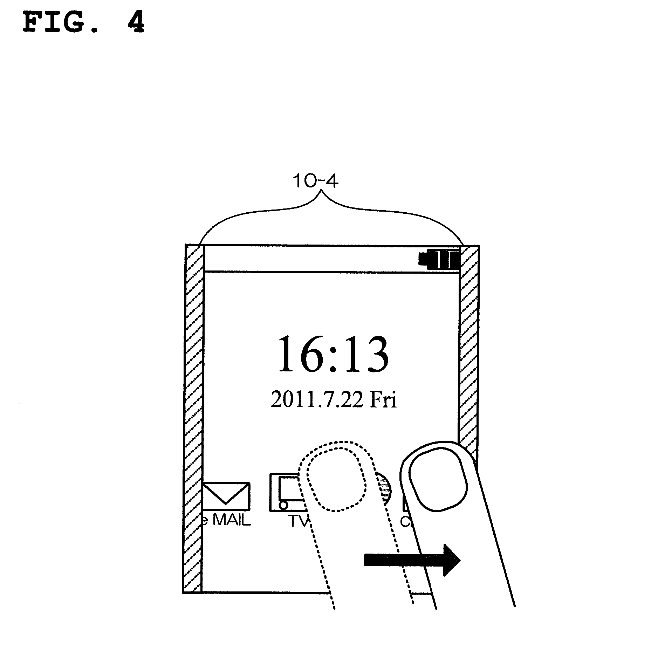

FIG. 3 is a flowchart illustrating an operation at the time of detection of a touch operation to the portable information terminal 10 according to the first embodiment. FIG. 4 is a schematic diagram illustrating a continuous touch operation in the first embodiment. The portable information terminal 10 executes the flowchart illustrated in FIG. 3 when a touch operation to the touch panel 10-2 by the user is detected. The portable information terminal 10 acquires touched coordinates from the touch panel 10-2 when a touch operation to the touch panel 10-2 is detected (Step S10).

After that, the portable information terminal 10 judges whether or not the touched coordinates correspond to a touch operation to the false detection guard area 10-4 (Step S12). In addition, when the coordinates are within the false detection guard area 10-4 (YES in Step S12), the portable information terminal 10 judges whether or not the touch operation to the false detection guard area 10-4 is performed during a continuous touch operation (Step S14). Here, as illustrated in FIG. 4, in the continuous touch operation, it is assumed that a touch operation is continuously performed from an area outside the false detection guard area 10-4 (touch operation validity area) to an area inside the false detection guard area 10-4 (touch operation invalidity area), and that a touch operation is detected in the area inside the false detection guard area 10-4 (touch operation invalidity area) after a touch operation has been detected across from the area outside the false detection guard area 10-4 (touch operation validity area) to the area inside the false detection guard area 10-4 (touch operation invalidity area).

In addition, when the touch operation is being performed during the continuous touch operation (YES in Step S14), the acquired coordinates are notified to the application software (Step S16). In the application software, processing that corresponds to the touch operation is performed. That is, when the touch operation to the false detection guard area 10-4 is performed during the continuous touch operation, the touch operation is judged valid and the corresponding processing is executed.

On the other hand, when the touch operation is performed not during the continuous touch operation (NO in Step S14), the acquired coordinates are discarded, and the processing ends without notification of the coordinates to the application software (Step S18). That is, when a touch operation is performed in the false detection guard area 10-4 first, it is judged that the hand touches the edge of the touch panel 10-2 involuntarily, and the touch operation is ignored.

In addition, when the touched coordinates are outside the false detection guard area 10-4 (NO in Step S12), the acquired coordinates are notified to the application software (Step S16). In the application software, processing that corresponds to the touch operation is executed. That is, when a touch operation is performed in the area outside the false detection guard area 10-4, it is judged that the touch operation to the touch panel 10-2 is performed intentionally and that the touch operation is valid, and the corresponding processing is executed.

### A-3. Modification example

Next, a modification example of the above-described first embodiment is described below.

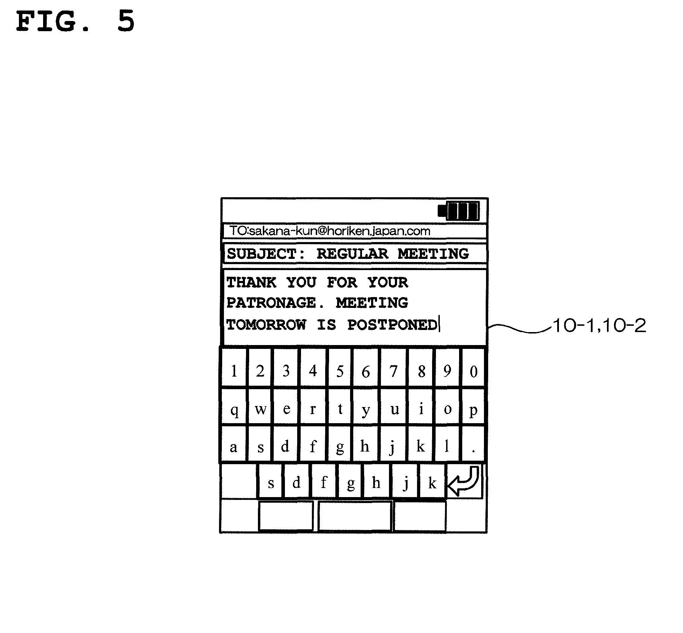

FIG. 5 is a schematic diagram illustrating a screen example in application software that desires an input using the touch panel 10-2 up to the edge of the display panel 10-1 in the first embodiment. In FIG. 5, a software keyboard is arranged in the lower half of the screen in order to perform character input, and touch switches are arranged up to the left and right edges of the screen. When such an application is executed, it is difficult to provide the false detection guard area 10-4 at the left and right edges of the touch panel 10-2 unless the application software (display program or the like in application software) is changed.

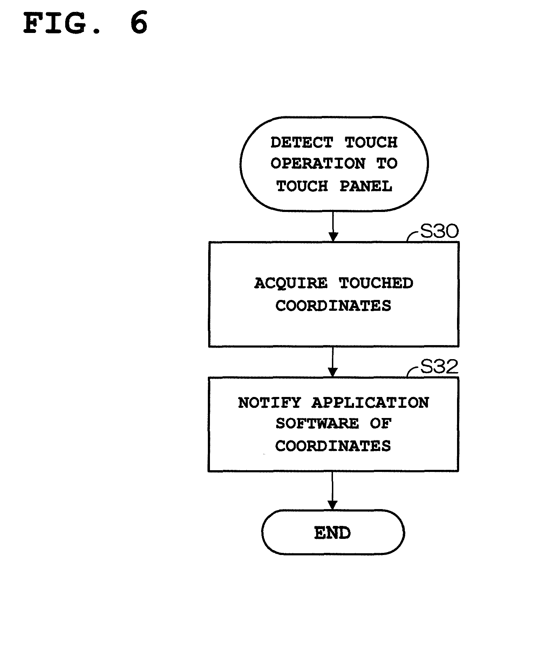

Therefore, in the first embodiment, when the application software is started up by which the touch switches are arranged up to the edges of the screen as illustrated in FIG. 5, the flowchart illustrated in FIG. 3 is replaced with a flowchart illustrated in FIG. 6, and the touch detection in the false detection guard area 10-4 is not executed. That is, in this case, when a touch operation to the touch panel 10-2 by the user is detected, the touched coordinates are acquired (Step S30), the coordinates are notified to the application (Step S32), and the processing ends. In the application software, processing that corresponds to the touch operation is executed.

According to the above-described first embodiment, a portion of the edge of the touch panel 10-2 is set as the false detection guard area 10-4, and even when the user holds the portable information terminal 10 with the hand and the finger touches the edge of the touch panel 10-2 false detection can be prevented because the touch operation to the false detection guard area 10-4 is ignored.

In addition, even when a touch operation is performed in the false detection guard area 10-4, the false detection guard area 10-4 is set invalid depending on the operation state of the touch panel 10-2, the usage state of the portable information terminal 10, and an application, so that it is possible to avoid that an operation of the portable information terminal 10 is hindered.

### B. Second embodiment

Next, a second embodiment of the present invention is described below.

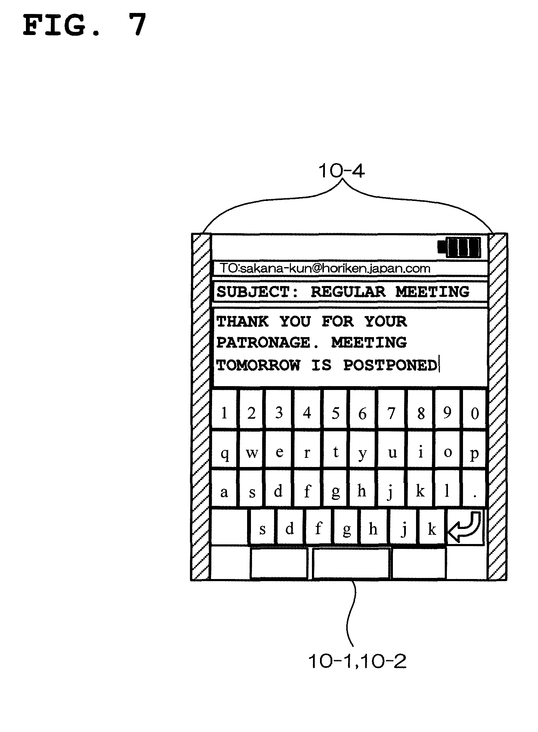

FIG. 7 is a schematic diagram illustrating the false detection guard area 10-4 that is set by the application software by which the touch switches are arranged up to the edges of the screen, according to the second embodiment. Note that a configuration of the portable information terminal 10 according to the second embodiment is similar to that of the first embodiment. As illustrated in FIG. 5, in the above-described first embodiment, when the application software by which the touch switches are arranged up to the edges of the screen is started up, the false detection guard area 10-4 is set invalid using the flowchart illustrated in FIG. 6 as a flow of the touch detection, so that false detection avoidance is set not to be performed.

In the second embodiment, the flowchart illustrated in FIG. 3 is merely used as the flow of the touch detection, the false detection guard area 10-4 is set valid, and the false detection avoidance by the flowchart illustrated in FIG. 3 is performed all the time. Therefore, in the second embodiment, as illustrated in FIG. 7, in the application software by which the touch switches are arranged up to the edges of the screen, the false detection guard area 10-4 is set on the touch panel 10-2, and a touch operation for the touch switches is allowed by performing display control so that the touch switches are arranged in an area other than the false detection guard area 10-4.

According to the above-described second embodiment, in the application software by which the touch switches are arranged up to the edges of the screen, the false detection guard area 10-4 is set on the touch panel 10-2, and display control is performed so that the touch switches are arranged in the area other than the false detection guard area 10-4, so that false detection can be prevented which is caused when the user holds the portable information terminal 10 with the hand and the finger touches the edge of the touch panel 10-2.

### C. Third embodiment

Next, a third embodiment of the present invention is described below.

In a case in which a touch operation to the touch panel 10-2 is performed in a state in which the user holds the portable information terminal with the hand, that is, a state in which the finger touches the edge portion of the touch panel 10-2 all the time, when notification of the coordinates is performed, and the processing is unconditionally executed on the OS or the application software side, there is a case in which false detection occurs.

Therefore, in the third embodiment, when a touch operation to an edge area of the touch panel 10-2 is performed for a certain time period or more, the edge area is set as an invalidity area (touch operation is judged invalid), and when a touch operation to the edge area is performed within the certain time period, the edge area is set as a validity area (touch operation is judged valid).

Therefore, in the third embodiment, in a case in which the user holds the portable information terminal 10 with the hand, a touch operation is ignored even when there is the touch operation to the edge area that the finger reaches, otherwise, for the touch operation to the edge area, the coordinates are notified to the application software.

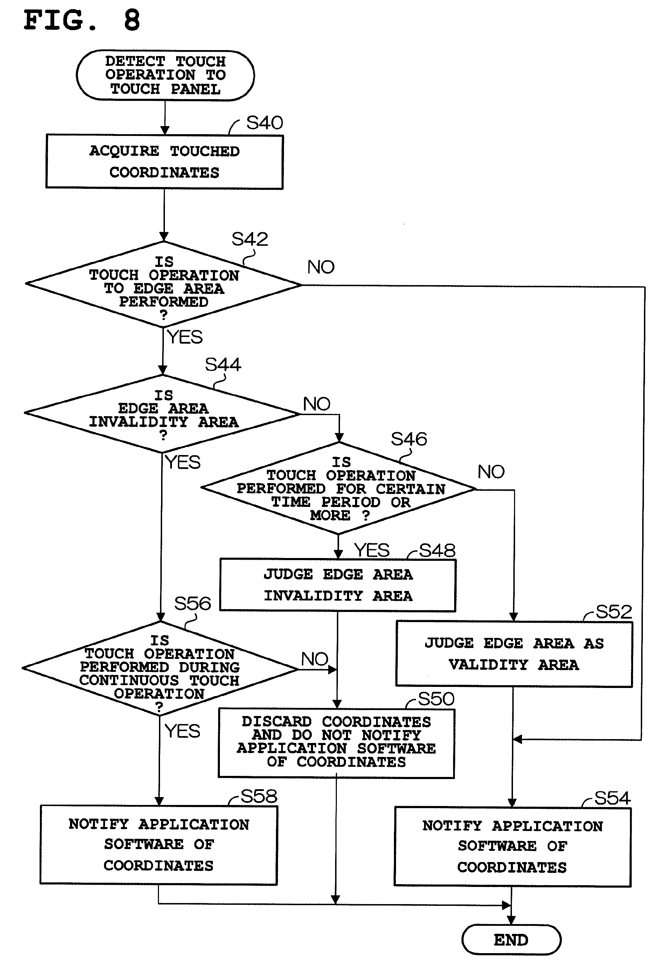

FIG. 8 is a flowchart illustrating an operation when a touch operation to the portable information terminal 10 according to the third embodiment is detected. When a touch operation to the touch panel 10-2 by the user is detected, the portable information terminal 10 executes the flowchart illustrated in FIG. 8. When the touch operation to the touch panel 10-2 is detected, the portable information terminal 10 acquires the touched coordinates from the touch panel 10-2 (Step S40).

After that, the portable information terminal 10 judges whether or not the touched coordinates correspond to a touch operation to the edge area (Step S42). In addition, when the touched coordinates do not correspond to a touch operation to the edge area (NO in Step S42), that is, when the touched coordinates correspond to an area outside the edge area, the acquired coordinate are notified to the application software (Step S54), and the processing ends. In the application software, processing that corresponds to the coordinates of the touch operation is executed. That is, when the touched coordinates correspond to the touch operation to the area outside the edge area, it is judged that the touch operation to the touch panel 10-2 is intentionally performed, and of course, that the touch operation is valid, and the corresponding processing is executed.

On the other hand, when the touched coordinates correspond to a touch operation to the edge area (YES in Step S42), it is judged whether or not the edge area is an invalidity area (Step S44). Note that, it is assumed that the edge area is set as the validity area in the initial setting. In addition, when the edge area is not the invalidity area (NO in Step S44), it is judged whether or not the edge area is touched for a certain time period or more (Step S46).

In addition, when the edge area is touched for the certain time period or more (YES in Step S46), it is judged that the portable information terminal 10 is held with the hand, and the edge area is judged as the invalidity area (Step S48). After that, the acquired coordinates are discarded, the processing ends without notification to the application software (Step S50) . That is, when the edge area is touched for the certain time period or more, it is judged that the portable information terminal 10 is held, and the touch operation to the edge area is ignored.

On the other hand, when the edge area is touched within the certain time period (NO in Step S46), it is judged that there is an intentional touch operation, the edge area is judged as a validity area (Step S52), the acquired coordinates are notified to the application software (Step S54), and the processing ends. In the application software, processing that corresponds to the coordinates of the touch operation is executed.

On the other hand, when there is a touch operation to the edge area (YES in Step S42), and the edge area is the invalidity area (YES in Step S44), that is, when a touch operation to the edge area that is set as the invalidity area is performed in the state in which the portable information terminal 10 is held, it is judged whether or not the touch operation is performed during the continuous touch operation (Step S56). Here, the continuous touch operation is as described above.

In addition, when the touch operation is performed during the continuous touch operation (YES in Step S56), the acquired coordinates are notified to the application software (Step S58), and the processing ends. Note that, in this case, the edge area is set as the invalidity area clearly, so that coordinates of the edge area, to which a touch operation is performed all the time may be ruled out. In the application software, processing that corresponds to the coordinates of the touch operation is executed. That is, in a case in which a touch operation to the edge area is performed during the continuous touch operation even when the edge area is set as the invalidity area, the touch operation is judged valid, and the corresponding processing is executed.

On the other hand, when there is a touch operation to the edge area (YES in Step S42), and the edge area is the invalidity area (YES in Step S44), that is, when a touch operation is performed not during the continuous touch operation even in a case the touch operation to the edge area that is set as the invalidity area is performed in the state in which the portable information terminal 10 is held (NO in Step S56), the acquired coordinates are discarded, the coordinates are not notified to the application software (Step S50), and the processing ends. That is, when the edge area is set as the invalidity area, and a touch operation to the edge area is performed not during the continuous touch operation, the touch operation is ignored.

According to the above-described third embodiment, when the edge area of the touch panel 10-2 is touched for the certain time period or more, the edge area is judged as the invalidity area (touch operation is judged invalid), and when the edge area is touched within the certain time period, the edge area is judged as the validity area (touch operation is judged valid), so that false detection that is caused when the edge of the touch panel 10-2 is touched by the finger at the time of holding of the portable information terminal 10 with the hand can be prevented.

Note that, in the above-described first and second embodiments, in addition to the continuous touch operation, when there is a touch operation to the false detection guard area 10-4 (touch operation invalidity area) within the certain time period after touch operation detection in the area outside the false detection guard area 10-4 (touch operation validity area), and for example, when the portable information terminal 10 is in inertia scroll after flick (operation in which the finger scrolls in a desired direction on the screen), in a command input standby state after long pressing by the finger (during copy and paste range specification standby, command selection display, or the like), or in a certain operation mode by the touch operation, it may be judged that there is an intentional touch operation to the touch panel 10-2 and the corresponding processing may be executed by judging the touch operation valid.

In addition, in the above-described first and second embodiments, when a touch operation to the false detection guard area 10-4 of the touch panel 10-2 is detected, the touched coordinates are not communicated to the application software by ignoring the operating software (OS), however, the embodiment is not limited to such an example, and the touched coordinates that correspond to all of the touch operations to the touch panel 10-2 are notified to the application software, it is judged whether or not the touch operation is a touch operation to the false detection guard area 10-4, from the touch coordinates on the application software side on which the touch coordinates are received, and the touch operation may be ignored when it is judged that the touch operation is a touch operation to the false detection guard area 10-4.

In addition, in the above-described first and second embodiments, when a touch operation to the false detection guard area 10-4 (touch operation invalidity area) is performed "during the continuous touch operation", the touch operation is judged valid (coordinates are notified to the application). However, a case in which the portable information terminal 10 is held with the hand and a case in which the portable information terminal 10 is touched and the touch operation is terminated within a certain time period are similar in that a touch operation to the false detection guard area 10-4 is performed, however there is no intention of a touch operation in the former case, and there is an intention of a touch operation clearly in the latter case.

Between the above-described former case and latter case, time periods for which a touch operation to the false detection guard area 10-4 is performed are distinctly different. Therefore, a touch continuation time period to the false detection guard area 10-4 (touch operation invalidity area) may be measured, and the touch operation to the false detection guard area 10-4 may be judged valid by judging that there is an intention of a touch operation clearly when the touch operation is performed within the certain time period (touch operation in a short time: that is, tapping). That is, a touch time period to the false detection guard area 10-4 (touch operation invalidity area) is measured, it is judged that there is no intention of a touch operation and the portable information terminal 10 is held and touched with the hand when the touch operation is performed for the certain time period or more, so that the touch operation to the false detection guard area 10-4 operation is judged invalid.

In addition, in the above-described first to third embodiments, the false detection guard area 10-4 having a fixed size (area) is provided, however, the size (area) of the false detection guard area 10-4 in which a touch operation is judged invalid or valid may be dynamically changed depending on an area that the finger touches. In addition, in this case, on the application software side, the size (area: width) of the display area may be changed so as not to be overlapped with the false detection guard area 10-4 the size (area) of which is dynamically changed.

The features of the present invention are noted below supplementarily.

A part or all of the above-described embodiments can be also described such as, but not limited to, the following supplementary notes.

### (Supplementary Note 1)

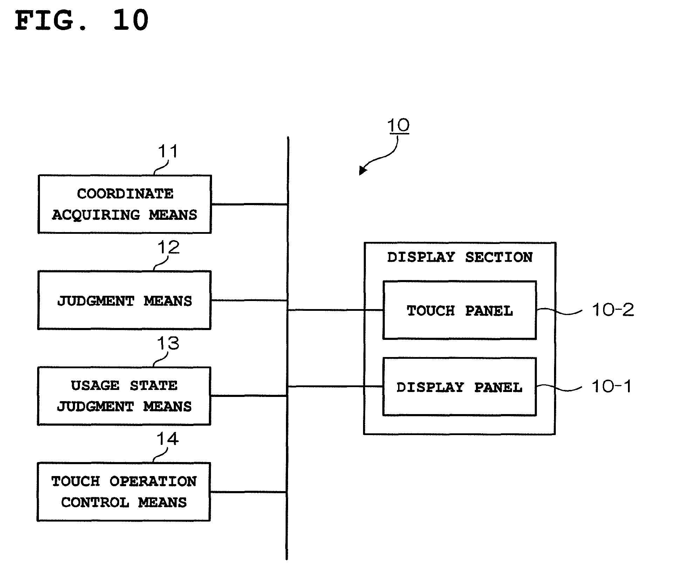

FIG. 10 is a configuration diagram of Supplementary Note 1. As illustrated in such a diagram, the invention described in Supplementary Note 1 is the portable information terminal 10 that includes the touch panel 10-2 on the display panel 10-1 comprising:
a coordinate acquiring means 11 configured to acquire coordinates on which a touch operation is performed from the touch panel 10-2 when there is the touch operation to the touch panel 10-2;
a judgment means 12 configured to judge whether or not the touch operation to the touch panel 10-2 is a touch operation to an edge area of the touch panel 10-2, based on the coordinates that are acquired by the coordinate acquiring means 11;
a usage state judgment means 13 configured to judge a usage state by the touch operation when the judgment means 12 judges that the touch operation to the touch panel 10-2 is the touch operation to the edge area of the touch panel 10-2; and
a touch operation control means 14 configured to limit the touch operation to the edge area of the touch panel 10-2, based on the usage state that is judged by the usage state judgment means 13.

### (Supplementary Note 2)

The portable information terminal according to Supplementary Note 1, wherein the edge area is an end portion of the touch panel, which is touched by a finger of a hand when the hand holds the portable information terminal.

### (Supplementary Note 3)

The portable information terminal according to Supplementary Note 1 or 2, further comprising:
an operation screen arrangement control means configured to arrange an operation screen that is displayed on the display panel so as not to be overlapped with the edge area of the touch panel.

### (Supplementary Note 4)

The portable information terminal according to Supplementary Note 1 or 2, wherein the touch operation control means sets the touch operation to the edge area of the touch panel valid when the operation screen that is displayed on the display panel is arranged up to the edge area of the touch panel.

### (Supplementary Note 5)

The portable information terminal according to any one of Supplementary Notes 1 to 4, wherein
the usage state judgment means judges whether or not the touch operation is performed during a continuous touch operation as the usage state when the judgment means judges that the touch operation to the touch panel is the touch operation to the edge area of the touch panel, and
the touch operation control means sets the touch operation valid when the usage state judgment means judges that the touch operation is performed during the continuous touch operation, and sets the touch operation invalid when the usage state judgment means judges that the touch operation is performed not during the continuous touch operation.

### (Supplementary Note 6)

The portable information terminal according to any one of Supplementary Notes 1 to 4, wherein
the usage state judgment means judges whether or not the touch operation to the edge area is performed for a certain time period or more, as the usage state when the judgment means judges that the touch operation to the touch panel is the touch operation to the edge area of the touch panel, and
the touch operation control means sets the edge area as an invalidity area in which the touch operation is judged invalid when the usage state judgment means judges that the touch operation to the edge area of the touch panel is performed for the certain time period or more, and sets the edge area as an validity area in which the touch operation is judged valid when the touch operation to the edge area of the touch panel is performed within the certain time period.

### (Supplementary Note 7)

The portable information terminal according to Supplementary Note 6, further comprising:
an edge area judgment means configured to judge whether the edge area is the invalidity area or the validity area when the judgment means judges that the touch operation to the touch panel is a touch operation to the edge area of the touch panel, wherein
the usage state judgment means judges whether or not the touch operation is performed during the continuous touch operation, as the usage state when the edge area judgment means judges that the edge area is the invalidity area, and
the touch operation control means judges the touch operation invalid when the usage state judgment means judges that the touch operation is performed not during the continuous touch operation, and judges the touch operation valid when the usage state judgment means judges that the touch operation is performed during the continuous touch operation.

### (Supplementary Note 8)

A touch operation control method to a touch panel that is provided on a display panel that is included in a portable information terminal, the touch operation control method comprising:
a coordinate acquiring step of acquiring coordinates on which a touch operation is performed from the touch panel when there is the touch operation to the touch panel;
a judgment step of judging whether or not the touch operation to the touch panel is a touch operation to an edge area of the touch panel, based on the acquired coordinates;
a usage state judgment step of judging a usage state by the touch operation when it is judged that the touch operation to the touch panel is the touch operation to the edge area of the touch panel; and
a touch operation control step of limiting the touch operation to the edge area of the touch panel, based on the judged usage state.

### (Supplementary Note 9)

A program that causes a computer of a portable information terminal that includes a touch panel on a display panel to execute;
a coordinate acquiring function to acquire coordinates on which a touch operation is performed from the touch panel when there is the touch operation to the touch panel;
a judgment function to judge whether or not the touch operation to the touch panel is a touch operation to an edge area of the touch panel, based on the coordinates that are acquired by the coordinate acquiring function;
a usage state judgment function to judge a usage state by the touch operation when the judgment function judges that the touch operation to the touch panel is the touch operation to the edge area of the touch panel; and
a touch operation control function to limit the touch operation to the edge area of the touch panel, based on the usage state that is judged by the usage state judgment means.

### DESCRIPTION OF REFERENCE NUMERALS

10 portable information terminal
10-1 display panel
10-2 touch panel
10-3 hard key
11 coordinate acquiring means
12 judgment means
13 usage state judgment means
14 touch operation control means

## Claims

1. A portable information terminal that includes a touch panel on a display panel, comprising:
a coordinate acquiring means configured to acquire coordinates on which a touch operation is performed from the touch panel when there is the touch operation to the touch panel;
a judgment means configured to judge whether or not the touch operation to the touch panel is a touch operation to an edge area of the touch panel, based on the coordinates that are acquired by the coordinate acquiring means;
a usage state judgment means configured to judge a usage state by the touch operation when the judgment means judges that the touch operation to the touch panel is the touch operation to the edge area of the touch panel; and
a touch operation control means configured to limit the touch operation to the edge area of the touch panel, based on the usage state that is judged by the usage state judgment means.

2. The portable information terminal according to claim 1, wherein the edge area is an end portion of the touch panel, which is touched by a finger of a hand when the hand holds the portable information terminal.

3. The portable information terminal according to claim 1 or 2, further comprising:
an operation screen arrangement control means configured to arrange an operation screen that is displayed on the display panel so as not to be overlapped with the edge area of the touch panel.

4. The portable information terminal according to claim 1 or 2, wherein the touch operation control means sets the touch operation to the edge area of the touch panel valid when the operation screen that is displayed on the display panel is arranged up to the edge area of the touch panel.

5. The portable information terminal according to any one of claims 1 to 4, wherein
the usage state judgment means judges whether or not the touch operation is performed during a continuous touch operation as the usage state when the judgment means judges that the touch operation to the touch panel is the touch operation to the edge area of the touch panel, and
the touch operation control means sets the touch operation valid when the usage state judgment means judges that the touch operation is performed during the continuous touch operation, and sets the touch operation invalid when the usage state judgment means judges that the touch operation is performed not during the continuous touch operation.

6. The portable information terminal according to any one of claims 1 to 4, wherein
the usage state judgment means judges whether or not the touch operation to the edge area is performed for a certain time period or more, as the usage state when the judgment means judges that the touch operation to the touch panel is the touch operation to the edge area of the touch panel, and
the touch operation control means sets the edge area as an invalidity area in which the touch operation is judged invalid when the usage state judgment means judges that the touch operation to the edge area of the touch panel is performed for the certain time period or more, and sets the edge area as an validity area in which the touch operation is judged valid when the touch operation to the edge area of the touch panel is performed within the certain time period.

7. The portable information terminal according to claim 6, further comprising:
an edge area judgment means configured to judge whether the edge area is the invalidity area or the validity area when the judgment means judges that the touch operation to the touch panel is a touch operation to the edge area of the touch panel, wherein
the usage state judgment means judges whether or not the touch operation is performed during the continuous touch operation, as the usage state when the edge area judgment means judges that the edge area is the invalidity area, and
the touch operation control means judges the touch operation invalid when the usage state judgment means judges that the touch operation is performed not during the continuous touch operation, and judges the touch operation valid when the usage state judgment means the touch operation judges that the touch operation is performed during the continuous touch operation.

8. A touch operation control method to a touch panel that is provided on a display panel that is included in a portable information terminal, the touch operation control method comprising:
a coordinate acquiring step of acquiring coordinates on which a touch operation is performed from the touch panel when there is the touch operation to the touch panel;
a judgment step of judging whether or not the touch operation to the touch panel is a touch operation to an edge area of the touch panel, based on the acquired coordinates;
a usage state judgment step of judging a usage state by the touch operation when it is judged that the touch operation to the touch panel is the touch operation to the edge area of the touch panel; and
a touch operation control step of limiting the touch operation to the edge area of the touch panel, based on the judged usage state.

9. A program that causes a computer of a portable information terminal that includes a touch panel on a display panel to execute;
a coordinate acquiring function to acquire coordinates on which a touch operation is performed from the touch panel when there is the touch operation to the touch panel;
a judgment function to judge whether or not the touch operation to the touch panel is a touch operation to an edge area of the touch panel, based on the coordinates that are acquired by the coordinate acquiring function;
a usage state judgment function to judge a usage state by the touch operation when the judgment function judges that the touch operation to the touch panel is the touch operation to the edge area of the touch panel; and
a touch operation control function to limit the touch operation to the edge area of the touch panel, based on the usage state that is judged by the usage state judgment function.
